# EUROPEAN PATENT APPLICATION

(11) **EP 3 293 978 A1**
(43) Date of publication of application: **14.03.2018**
(21) Application number: 16188198.2
(22) Date of filing: 09.09.2016
(51) Int. Cl.: H04N 21/418, H04N 21/835, H04N 21/81, G06F 21/12, G06F 21/44, G06F 21/57, G06F 21/51

(54) **METHOD FOR IMPLEMENTING A NEW DEFAULT CONFIGURATION IN A HOST DEVICE AND SYSTEM THEREFOR**

(71) Applicant: Nagravision S.A., 1033 Cheseaux-sur-Lausanne (CH)
(72) Inventor: DESARZENS, Philippe, 1030 Bussigny (CH); GREMAUD, Fabien, 1618 Châtel-St-Denis (CH); BUSSY, Jean-Luc, 1304 Cossonay-Ville (CH)
(74) Representative: Leman Consulting S.A.

(57) **Abstract**

The present invention relates to a method for implementing a new default configuration (40), acting as new default user interface application (41) and/or as new default settings (42), in a host device (10). This method requires an additional device (20) configured to be connected to the host device (10) for managing the implementation of the new default configuration (40). This method comprises:
- connecting the additional device (20) to the host device (10);
- signaling to the host device (10) that a new default configuration (40) is available;
- acquiring the new default configuration (40) at the host device (10);
- authenticating the new default configuration (40) using authentication elements (25) stored in the additional device (20); and
- in case of successful authentication, installing the acquired new default configuration (40) in the host device (10).

The invention also relates to a system for implementing said method.

## Description

### INTRODUCTION

The present disclosure relates to the field of multimedia devices such as rendering devices. More particularly, it relates to the configuration of such a rendering device, in order to implement or install therein a new configuration. This new configuration acts as new default user interface application and/or as new default settings for this rendering device. This rendering device is typically designed to receive TV services, preferably Pay-TV services from a content provider or service operator.

### BACKGROUND

Historically, the access to Pay-TV services or programs was possible through the use of a Set-top Box (STB) connected to the rendering device (e.g. a television). The STB may be realized in the form of a connectable module (CAM - Conditional Access Module) directly connected to the rendering device. This module is in charge of extracting access conditions linked with the multimedia stream provided by the content provider and compares them with user's rights stored in a secure memory of the CAM. If a match is found, the CAM decrypts the multimedia stream and returns it to the rendering device. The well known standard for this implementation is Cl+. Nowadays, the preferred connection is USB in view of the increase of data transfer rate allowed by this technology and the worldwide acceptance to all devices. Anyway, the CAM remains a module that is mainly used to control the decryption of the multimedia stream, since the access to a clear content, from an encrypted multimedia stream, remains a main concern in the Pay-TV field.

On the other hand, any television comprises default software implemented as factory software by the manufacturer for providing an easy access to the functionalities of the television. Such software may take the form of a default application used for example as an Electronic Program Guide (EPG) for displaying, in a friendly way, TV programs or scheduling information for current and upcoming programming. Accordingly, such default application can be regarded as a user interface application. Such a user interface is not limited to play the role of an EPG but may be used for other purposes, for example to manage or handle personal media recordings or to provide access to on-demand content. Factory or default software may also relate to other menu-based application, for example in order to provide access to TV settings.

Native configurations (i.e. factory default software and/or default settings) are typically defined and implemented by the manufacturer of the television. A third party, such as a TV operator, has no access to at least a part of the native configuration of a television, neither through a CAM, nor through any STB.

Accordingly, there is an interest for the operators to access to the rendering device in order to implement therein a new default configuration while meeting reliable security requirements.

### SUMMARY OF THE PRESENT SOLUTION

To address this concern, the present disclosure suggests a solution that allows the implementation of a new configuration in a host device such as a rendering device. Such a configuration acts as new user interface application and/or as new settings in the host device. Preferably, such a configuration can be regarded as a default configuration, acting as new default user interface application and/or as new default settings.

The new default configuration may replace, at least partially, a native configuration of the host device. This means that the new default configuration may fully replace the native default configuration or it may modify the native default configuration. For example, this can be achieved to provide other functionalities, new presentations or new layouts with regard to those provided by native applications and/or data resulting from native settings.

On the other hand, the new default configuration may be used as required configuration, for example in the case where a native configuration is not already embedded in the host device or in the case where the embedded native configuration has been erased or corrupted.

To these ends, the present solution firstly refers to a method for implementing the aforementioned new default configuration in a host device using an additional device such as a dongle. This additional device is configured to be connected to the host device to manage the implementation of the new default configuration. The method comprises:
- connecting the additional device to the host device;
- signaling to the host device that a new default configuration is available;
- acquiring the new default configuration at the host device;
- authenticating the new default configuration using authentication elements stored in the additional device; and
- in case of successful authentication, installing the acquired new default configuration in the host device.

Thanks to the authentication step, the installation of the acquired new default configuration in the host device remains under the control of the additional device. This additional device can be regarded as a complementary device which, for example, may be plugged to the host device such as a television.

Preferably, the new default configuration is transmitted in an encrypted form in order to be securely downloaded and installed on the host device.

The solution disclosed in the present disclosure further refers to a system for implementing the method according to any embodiment of this method. To this end, this system comprises at least the host device and the additional device. These two devices are configured to be connected to one another. The additional device being further configured to manage the implementation of the new default configuration in the host device. To this end, the additional device stores authentication elements that are to be used to perform the authentication step of the relevant method.

According to another embodiment, the system further comprises a service operator and the host device is further configured to be connected to this service operator in order to perform the implementation of the new default configuration in the host device.

Other advantages and embodiments will be further disclosed in the following detailed description.

### BRIEF DESCRIPTION OF THE DRAWING

The solution and the embodiments suggested in the present disclosure should be taken as non-limitative examples and will be better understood with reference to the attached figure in which:

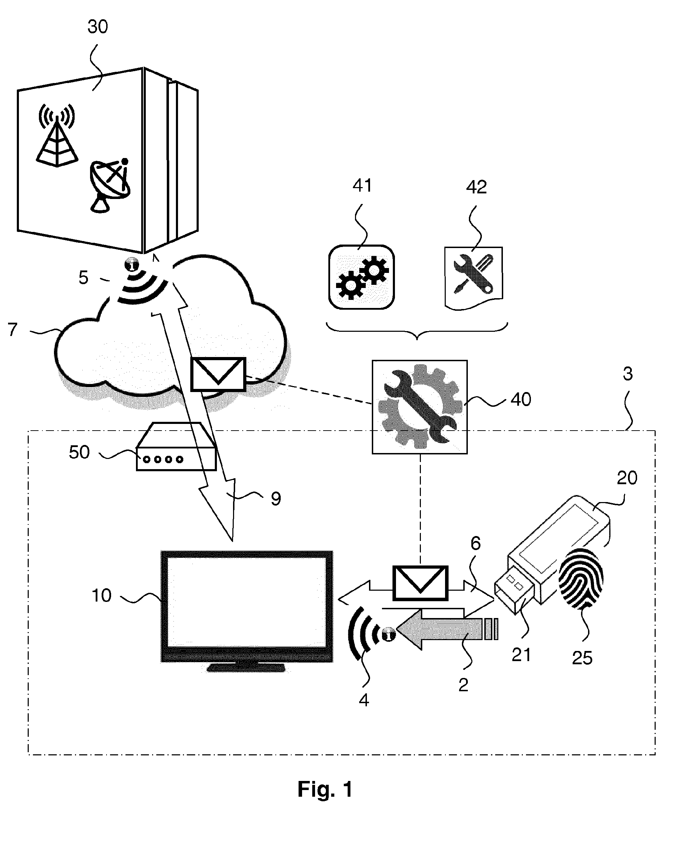

Figure 1 schematically depicts the entities and data exchanges involved in the method and the system suggested in the present solution.

### DETAILED DESCRIPTION

The following description refers both to the method and to the system. Although these two subject-matters are presented one after the other, it should be understood that any features disclosed in connection with the method may be applied, if any, to the system for implementing this method and vice-versa.

### Main involves entities

The main entities that may play a significant role in the present solution are disclosed in Fig. 1. Accordingly, this Figure shows a host device 10, an additional device 20 and a service operator 30. Nevertheless, the service operator 30 should be regarded as being optional in accordance with a basic embodiment which will be disclosed hereafter as first embodiment.

The host device 10 relates to a multimedia device, preferably a rendering device such as a television or any other home device (e.g. tablet computer, portable media player, personal computer, media system, etc..) suitable to render an audio and/or video stream from an input multimedia stream. This stream may typically be provided by the service operator 30 which therefore may be also regarded as a content provider or a media server.

Preferably, the service operator 30 is a remote server to which the host device 10 can connect to get media content through a multimedia stream. Media content can be delivered by any manner, e.g. by streaming or by downloading the content before its playing. Furthermore, any routing scheme such as broadcast, multicast or unicast schemes may be applied for delivering the content to the host device 10.

The additional device 20 should be regarded as a complementary device with respect to the host device 10. Preferably, the additional device 20 is a removable device that may be plugged to the host device 10. Accordingly, the additional device 20 is still preferably an external removable device, for example a dongle as shown in Fig. 1. Still preferably, the additional device 20 is provided with an USB connector 21 designed to be connected to a corresponding connector (not shown) arranged in the host device. The corresponding connector may typically be a USB port easily accessible for an end-user.

According to one embodiment, the additional device 20 may be a conditional access device, in particular a CAM provided with additional functionalities so that it may be used not only to control the decryption of the multimedia stream, but also to implement the solution suggested in the present disclosure.

Preferably, the additional device 20 is owned by the service operator 30. Accordingly, each service provider 30 may suggest its own additional device 20. In one embodiment, the additional device 20 gets assigned to a service operator and cannot be re-assigned anymore.

### The method

According to a first embodiment, the present solution proposes a method for implementing a new default configuration 40, acting as new default user interface application 41 and/or as new default settings 42, in the host device 10 using the additional device 20. As schematically shown through the arrow 2, the additional device 20 is configured to be connected to the host device for managing the implementation of the new default configuration 40.

The additional device 20 may implement a standard protocol with the host device 10 in order to perform the implementation of the new default configuration.

The method to perform such this implementation comprises the following steps:
- connecting the additional device 20 to the host device 10;
- signaling to the host device 10 that a new default configuration 40 is available;
- acquiring the new default configuration 40 at the host device 10;
- authenticating the new default configuration 40 using the additional device 20, in particular using authentication elements 25 stored in the additional device 20; and
- in case of successful authentication, installing the acquired new default configuration 40 in the host device 10.

Depending on the entity which signals to the host device 10 that a new default configuration 40 is available, the first two steps could be reversed. Accordingly, it should be understood that the above steps are not listed in a limitative order.

### Signaling step

According to one embodiment, the signaling step is performed by the additional device 20, preferably once it is connected to the host device 10. To this end, the simple fact to connect the additional device 20 may trigger a signal 4 informing the host device 10 that a new default configuration is available or may be available. Alternatively, the signal 4 may be triggered by the additional device 20, in particular via the internal software processed by CPU (Central Processing Unit) of the additional device 20. Still preferably, the signal 4 may be triggered after a checking process aiming to check if a new default configuration 40 is available, for example depending on a current version installed on the host device and/or depending on the entitlement assigned to the host device to receive a new default configuration 40.

According to another embodiment, the signaling step is performed by the service operator 30, for example through a dedicated signal, here referred as operator signal 5, sent to the host device 10 as schematically shown in Fig. 1. The operator signal 5 may be distinct from the multimedia stream provided by the service operator or may be included in this stream. Indeed, the multimedia stream is not limited to audio and/or video data, but may carry other data such as control data for example.

Preferably, the operator signal 5 may be triggered once a new default configuration 40 is available from the service operator 30. The receipt of the second signal 5 can be regarded as a request for connecting the additional device 20 to the host device 10 in order to perform the implementation of the new default configuration 40. Indeed, this connection appears as being one of the requirements of the present method to perform the implementation of the new default configuration in compliance with a reliable security level.

According to an alternative way, the signaling step may be performed by the service operator 30 via the additional device 20. To this end, the operator signal 5 may be transmitted from the service operator 30 to an end-user gateway 50. This gateway may define the boundary between an external network 7 (e.g. the Internet) and a local area network (LAN) located on the end-user side. According to Fig. 1, the external network is schematically depicted by a cloud and the LAN is schematically delimited by the end-user area 3. The gateway 50 may be used to forward the multimedia stream to the host device 10 through a wired or wireless LAN within the end-user area 3. On the other hand, the additional device 20 may be configured to be wirelessly connected to the gateway (e.g. via WiFi) and, therefore, may be suitable to receive the operator signal 5 from the service operator 30. Accordingly, the gateway may also play the role of an access point. Once received by the additional device, the operator signal may be processed by the additional device, for example before to be transmitted to the host device 10. Alternatively, the additional device 20 may transmit other data to the host device instead of transmitting the operator signal 5.

### Acquiring step

The acquisition of the new default configuration 40 by the host device may be carried out by several ways. Two of these ways are schematically shown in Fig. 1 by the illustration of the two envelopes which represent sending of messages or data packets. Data exchanges between the host device 10 and the additional device 20 are schematically depicted by the two-way arrow 6, whereas data exchanges between the host device 10 and the service provider 30 are shown by the two-way arrow 9.

According to the first way, the acquiring step is performed by transmitting the new default configuration 40 from the service operator 30 to the host device 10. Such a transmission may be performed, for example, in the same way as for the transmission of the operator signal 5. In one embodiment, the host device may also retrieve the new default application 40 from a dedicated network location.

According to the second way, the new default configuration 40 may be transmitted from the additional device 20 to the host device 10. To this end, the new default configuration could have been previously stored in the additional device, for example in a secure memory within the additional device. Such storage may be performed during the manufacturing or the personalizing of the additional device. For example, a new default configuration may be already stored in the additional device when the end-user gets the additional device. For instance, the end-user may get the additional device once he concludes a subscription with the service operator, or when he purchases the host device, which may be supplied with the additional device storing a new default configuration.

### Authenticating step

As mentioned in the first basic embodiment, an authentication step is performed using authentication elements 25 stored in the host device. These data can be stored in the same way as for the storage of the new default configuration mentioned above. Since authentication elements are sensitive data or functions, they are preferably stored in a secure way, for example in a secure memory within the additional device, still preferably in a memory monolithically associated to the electronic chip of the additional device. In one embodiment, authentication elements may be stored in an encrypted form.

Depending on the embodiments, the authentication elements may relate to at least one of an authentication code, a hash value or a digest, a digital signature, a hash function or any other authentication function, and an authenticating process which may include cryptographic operations. Accordingly, the authentication elements may also comprise an authentication function or more than one authentication function.

According to one embodiment, the additional device 20 is configured to provide an activation code as authentication elements. In this case, the authentication step may be performed by:
- transmitting the activation code from the additional device 20 to the service operator 30; and
- checking if the activation code is valid at the service operator.

Preferably, the transmission of the activation code to the service operator 30 is carried out via the host device 10. Nevertheless, such a transmission may be carried out by transmitting the activation code from the additional device 20 towards the gateway 50 (access point), in particular if the additional device comprises means suitable to directly communicate with the gateway 50.

Checking if the activation code is valid may be performed by comparing the activation code received at the service operator with a reference code stored in a database of the service operator. If any, the transmission of the activation code may be identified by the service operator using an identifier, for example an identifier of the additional device 20. In one embodiment, each reference code may be stored in the database of the service operator together with a relevant additional device identifier, e.g. within a record. Accordingly, the service operator may be able to identify each incoming activation code in order to properly perform the checking operation with the appropriate reference code.

According to another embodiment, the authentication step may be performed by:
- entering or acquiring an activation code in the host device 10;
- transmitting this activation code from the host device 10 to the additional device 20; and
- checking, at the additional device, if the activation code received by the additional device is valid by comparing this activation code with authentication elements stored in the additional device.

The entering the activation code in the host device may be done e.g. once the host device requests the en-user to enter the activation code. The activation code may be entered using any user interface, e.g. by using a keypad, a remote control, a mouse or via a short range communication interface. For example, the activation code may be entered in the host device from a portable device (e.g. a smart phone) compliant with NFC technology if the short-range communication interface of the host device is also NFC compliant. Other short-range technologies could also be used.

The operation aiming to check the validity of the entered activation code, may be performed by using a reference code previously stored in the additional device 20 as authentication elements.

According to still another embodiment, the authentication step may be performed using a digital signature. Such a signature may correspond to a digest of at least a part of the new default configuration. Such a digest may be obtained using a one-way function, for example by applying a hash function on the aforementioned at least par of the new default configuration. In one embodiment, the digest may be further encrypted.

This digital signature, or this digest, may be firstly acquired by the host device 10 from the service operator 30. Then, the authentication step may be performed at the additional device by:
- transmitting the digital signature and the new default configuration from the host device 10 to the additional device 20;
- computing, at the additional device 20, a second digital signature by applying a one-way function to the acquired new default configuration, said one-way function may be stored as authentication elements in the additional device; and
- checking if the acquired digital signature is equal to the computed second digital signature.

### Encrypted data

In the case where the signature is encrypted, cryptographic operations may also be undertaken to properly achieve the aforementioned comparison. In this case, it should be noted that the additional device 20 may further store the appropriate cryptographic key and the appropriate cryptographic process, so that encrypted data can be used in the data exchanges with a remote entity such as the service operator 30 for instance.

In a similar approach, it should be noted that the new default configuration 40 may also be transmitted in an encrypted form, for example from the service operator 30 to the host device 10. Once the encrypted new default configuration is obtained at the host device, the latter may request the additional device to decrypt the new default configuration to ensure privacy. Alternatively, the host device 10 may be in charge of the decryption process. In this case, the host device 10 has to request, to the additional device 20, at least the appropriate cryptographic key to perform the decryption.

Accordingly, at least one of the service operator and the additional device comprises a key for decrypting the encrypted new default configuration. The relevant cryptographic process used to process encrypted data may relate to any encryption scheme, e.g. using symmetric or asymmetric encryption keys with any suitable algorithm.

### Installation step

Whatever the embodiment used to perform the authentication step and in case of successful authentication, the acquired new default configuration 40 is then installed in the host device 10. However, if the authentication fails, countermeasures may be undertaken.

According to one embodiment, the implementation of the new default configuration 40 in the host device 10 replaces at least a part of a native default configuration of said host device. In other words, the installation of the new default configuration may replace entirely the native or previous default configuration, or may replace some parts of the default configuration initially or previously installed in the host device. Furthermore, it should be noted that the new default configuration 40 could take place in the host device as a first default configuration, in particular if no default configuration was previously installed, e.g. during the manufacture of the host device.

According to another embodiment, the implementation of the new default configuration 40 in the host device 10 may be implemented, in addition to a native default configuration of said host device, as a selectable new default configuration. Accordingly, more than one configuration may be present in the host device, and one of those configurations may be selected as default configuration, e.g. by the end-user. Accordingly, the end-user will have the possibility to choose the best default configuration, for example the configuration that is most friendly.

In one embodiment, the new default configuration may be launched by the additional device 20, e.g. using specific launching parameters. Such parameters may be regarded e.g. as default setting parameters. In one embodiment, these parameters may be regarded as specific requirements to meet in order to authorize the launching of the default configuration.

Once the new default configuration is installed or launched and is e.g. in an active state, the host device 10 may be considered as being securely "verticalized" by the additional device 20. Accordingly, one may understand that a third party default configuration has been securely downloaded, installed and, if any, executed, on a standard horizontal host device. The so-called "verticalization notion" can be assimilated as a control or a takeover of the default configuration of the host device by the service operator. Advantageously, the service operator becomes able to control the default configuration of the host device, while this configuration is rather known as native software (i.e. factory software or factory configuration) of the host device that cannot be changed or controlled by a third party. Thank to such a takeover, a personalization of the default configuration of the host device becomes also possible.

### Nature of the new default configuration

It should be understood that the terms "new default configuration" are used in the present disclosure as a generic expression to define new default user interface application 41 and/or a new default settings 42, both of them referring to the host device, in particular to the factory configuration of the host device. Of course, such a factory configuration relates to a software configuration, in contrast to a hardware configuration. Furthermore, the default user interface application installed in the host device should not be confused with any common application that may be downloaded from an application server. Such common applications may be downloaded in addition to the default software configuration (native configuration) of the host device. Thus, the default user interface application refers to native user interface software that has been installed e.g. as a factory configuration in the host device.

According to this approach, the new default configuration may be for example an electronic program guide (EPG) acting as a new default user interface application 41.

According to one embodiment, the new default user interface application 41 may be launched by default on all channels (e.g. TV channels, radio channels) received by the host device 10 when selected or when any other application associated to a channel is closed.

According to another example, the new default configuration 40 may be an advertisement specific application launched when a channel managed by the additional device is selected.

The new default settings 42, may refers for example to menu-based windows allowing to set the picture (backlight, brightness, color, sharpness, color temperature, etc...), the sound (sound mode, sound effect speaker settings, etc...), the setup parameters (language, clock/timers, closed captions, etc...), the screen, the channels, the parental locks, the power mode etc... As further examples, new default settings 42 may re-configure the default channel lists of the host device or may provide links to available default user interface applications 41.

As another example, a new default setting 42 may display a third party logo (e.g. the logo of the service operator) along the configuration within the native user interface of the host device.

Several new default user interface applications may be installed in the host device. They may be installed within a single package (e.g. all at once), or may be installed successively one after the other, for example in several times.

The new default configuration 40 may provide a finest aspect, e.g. a friendly user interface or presentation which may be provide easier access to settings, factory settings or to any other functionalities that basically offered as standard by the manufacturer of the host device. However, thanks to aforementioned "verticalization", additional functionalities may be offered to the end-user, e.g. in order to personalize the default configuration of the host device with at least one standard default configuration compliant with the service operator. Advantageously, such a personalization may also be used to change the behaviours of the host device. Still advantageously, providing a new default configuration as a standard default configuration of the service operator, the tasks of the service operator, in particular those of the help desk of this operator, becomes easier especially when the end-users request support or assistance by calling the service operator.

### System for implementing the method

The present solution also relates to a system for implementing the above-described method according to any of its embodiments. To this end, the system may comprise at least a host device 10 and an additional device 20 both configured to be connected to one another. As explained in connection with the relevant method, the additional device 20 is further configured to manage the implementation of said new default configuration 40 in the host device 10.

To this end, the additional device 20 may comprise connecting means, e.g. an USB connector 21, a sending and receiving unit for exchanging message or data with at least the host device 10, at least a memory for storing data temporarily and/or permanently, and an authentication unit suitable to perform at least the authentication operations disclosed in the relevant method.

Furthermore, the authentication unit may be further configured to perform cryptographic operations or the additional device 20 may further comprises a dedicated cryptographic unit suitable to protect and/or unprotect data intended to be exchanged with any other entity of the system.

Preferably, the additional device 20 comprises a secure memory for storing sensitive data disclosed in the above method.

Still preferably, the additional device 20 is a dongle or a USB key. Moreover, the additional device 10 may also comprise the functionalities of a Conditional Access Module, so that it may be regarded as an enhanced CAM.

As mentioned in the method, the host device 10 is a rendering device, preferably a media rendering device such as a television or a radio.

According to a preferred embodiment, the system further comprises the service operator 30. Thus, the host device 10 may be further configured to connect to the service operator 30 in order to perform the implementation of the new default configuration in said host device, in accordance with some embodiments of the relevant method.

In one embodiment, the system may further comprise the gateway 50, for instance in order to exchange data directly with the additional device 20. In this case, the sending and receiving unit of the additional device may be further configured to wirelessly exchange data with a gateway.

According to one embodiment, the sending and receiving unit of the additional device 20 may be NFC compliant in order to also receive (or exchange) data with a portable device, for example with a smart phone or a tablet computer.

It should be noted that any other feature mentioned in connection with the method remains valid for the present system. For this reason, the disclosure of many variants and embodiments that may be applied to the present system will not be repeated.

### Final considerations

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are believed to be described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

## Claims

1. A method for implementing a new default configuration (40), acting as new default user interface application (41) and/or as new default settings (42), in a host device (10) using an additional device (20) configured to be connected to said host device (10) for managing the implementation of said new default configuration (40), said method comprising:
- connecting the additional device (20) to the host device (10);
- signaling to the host device (10) that a new default configuration (40) is available;
- acquiring said new default configuration (40) at the host device (10);
- authenticating said new default configuration (40) using authentication elements (25) stored in said additional device (20); and
- in case of successful authentication, installing the acquired new default configuration (40) in the host device (10).

2. The method of claim 1, wherein the signaling step is performed by the additional device (20) once connected to the host device (10).

3. The method of claim 1, wherein the signaling step is performed by a service operator (30), requesting the connection of the additional device (20) to the host device (10).

4. The method of any of claims 1 to 3, wherein the acquiring step is performed by transmitting said new default configuration (40) from a service operator (30) to the host device (10).

5. The method of any preceding claims, wherein the new default configuration (40) has been previously stored in the additional device (20), and the acquiring step is performed by transmitting said new default configuration (40) from the additional device (20) to the host device (10).

6. The method of any of preceding claims, wherein the additional device (20) is configured to provide an activation code as authentication elements (25), and the authenticating step is performed by:
- transmitting said activation code from the additional device (20) to the service operator (30) via the host device (10); and
- checking if said activation code is valid at the service operator (30).

7. The method of any of claims 1 to 5, wherein the authenticating step is performed by:
- entering an activation code in the host device (10);
- transmitting said activation code from the host device (10) to the additional device (20); and
- checking if said activation code is valid at the additional device (20) by comparing said activation code with said authentication elements (25) stored in the additional device (20).

8. The method of claim 4, wherein a digital signature, relating to the new default configuration (40), is further acquired by the host device (10) from the service operator (30), and the authenticating step is performed by:
- transmitting the digital signature and the new default configuration (40) from the host device (10) to the additional device (20);
- computing, at the additional device (20), a second digital signature by applying a one-way function to the acquired new default configuration (40), said one-way function being stored as authentication elements (25) in said additional device (20); and
- checking if the acquired digital signature is equal to the computed second digital signature.

9. The method of any of preceding claims, wherein said new default configuration (40) is transmitted in an encrypted form; and at least one of the host device (10) and the additional device (20) comprises a key for decrypting the encrypted new default configuration (40).

10. The method of any of preceding claims, wherein the implementation of said new default configuration (40) in the host device (10) replaces at least a part of a native default configuration of said host device (10).

11. The method of any of claims 1 to 9, wherein the implementation of said new default configuration (40) in the host device (10) is implemented, in addition to a native default configuration of said host device (10), as a selectable new default configuration (40).

12. The method of any of preceding claims, wherein said new default configuration (40) is launched by the additional device (20) using specific launching parameters.

13. The method of any of preceding claims, wherein said new default configuration (40) is an electronic program guide acting as a new default user interface application (41).

14. A system for implementing the method of any of preceding claims, comprising at least a host device (10) and an additional device (20) both configured to be connected to one another, said additional device (20) being further configured to manage the implementation of said new default configuration (40) in said host device (10).

15. The system of claim 15, further comprising a service operator (30), said host device (10) being further configured to connect to said service operator (30) in order to perform the implementation of said new default configuration (40) in said host device (10).
